# EUROPÄISCHE PATENTSCHRIFT

(11) **EP 2 425 368 B1**
(45) Veröffentlichungstag und Bekanntmachung des Hinweises auf die Patenterteilung: **02.08.2017**
(21) Anmeldenummer: 10717608.3
(22) Anmeldetag: 26.04.2010
(51) Int. Cl.: G06F 21/00

(54) **SPEICHERMEDIUM MIT VERSCHLÜSSELUNGSEINRICHTUNG**
STORAGE MEDIUM WITH ENCRYPTION UNIT
SUPPORT DE STOCKAGE AVEC DISPOSITIF DE CHIFFREMENT

(30) Priorität: 28.04.2009 DE 102009019051
(43) Veröffentlichungstag der Anmeldung: 07.03.2012
(73) Patentinhaber: Giesecke & Devrient GmbH, 81677 München (DE)
(72) Erfinder: GROBBEL, Hubertus, 81829 München (DE); GUTER, Fabian, 85622 Feldkirchen (DE); ROSIN, Marcus, 82319 Starnberg (DE)
(86) Internationale Anmeldenummer: PCT/EP2010/055518
(87) Internationale Veröffentlichungsnummer: WO 2010/125021

(56) Entgegenhaltungen:
- EP-A1- 1 074 906
- EP-A2- 1 335 364
- WO-A2-03/012657
- DE-A1- 19 803 218
- DE-A1-102006 048 029
- GB-A- 2 405 007
- US-A- 6 079 019
- US-A1- 2003 085 289
- US-A1- 2007 113 097
- US-A1- 2007 168 292

## Beschreibung

Die Erfindung betrifft ein Speichermedium mit Verschlüsselungseinrichtung gemäß dem Oberbegriff von Anspruch 1.

Ein Beispiel für ein bekanntes Speichermedium im Sinn der Erfindung ist eine Flash-Speicherkarte mit Verschlüsselungsoption, mit einem als Ver- und Entschlüsselungseinrichtung verwendeten Kryptoprozessor und einem in der Karte abgespeicherten symmetrischen Ver- und Entschlüsselungsschlüssel zum Verschlüsseln von Daten. Bei einer solchen Flash-Speicherkarte kann ein Nutzer an einem Kartenterminal, z.B. einem PC mit angeschlossenem Flash-Kartenleser oder einem mobilen Kartenterminal wie z.B. einem Mobiltelefon mit Flash-Kartenleser, für in der Flash-Speicherkarte abzuspeichernde Daten über ein Menü des Kartenterminals optional auswählen, dass die Daten verschlüsselt in der Flash-Speicherkarte abgespeichert werden sollen. Unverschlüsselt abgespeicherte Daten können aus der Flash-Speicherkarte ausgelesen werden. Verschlüsselt abgespeicherte Daten können nur nach einer erfolgreichen Authentisierung des Nutzers gegenüber der Flash-Speicherkarte aus der Flash-Speicherkarte ausgelesen werden. Bei einem Versuch, verschlüsselt abgespeicherte Daten ohne Authentisierung auszulesen, wird der Auslesevorgang ohne Ausgabe von Daten abgebrochen und ggf. eine Fehlermeldung oder Authentisierungsaufforderung ausgegeben.

Bei manchen Anwendungsfällen wird ein Besitzer eines Speichermediums, der von einem Eigentümer des Speichermediums mit dem Abspeichern von Daten in das Speichermedium beauftragt worden ist, vom Eigentümer als potentiell nicht vertrauenswürdig angesehen. Beispielsweise soll ein Überwachungsdienst, der zu Überwachungszwecken aufgezeichnete Foto- oder Videoaufnahmen in einem Speichermedium abspeichert, keine Möglichkeit haben, die abgespeicherten Foto- oder Videoaufnahmen wieder auszulesen und missbräuchlich zu verwenden, z.B. zu privaten Zwecken im Bekanntenkreis oder im Internet zu veröffentlichen. Selbst wenn das Speichermedium eine Verschlüsselungsoption hat, ist es möglich, dass der nicht vertrauenswürdige Besitzer diese einfach nicht benutzt und somit abgespeicherte Daten nach dem Abspeichern beliebig auslesen kann.

DE 198 03 218 A1 beschreibt eine Speicherkarte mit einigen Merkmalen des Oberbegriffes von Anspruch 1. Daten sollen entweder beim Einlesen in die Karte verschlüsselt und beim Auslesen entschlüsselt werden oder unverschlüsselt ein- und ausgelesen werden. US 2008/0071977 A1 zeigt eine Karte mit Fingerabdrucksensor, der verwendet wird, um einen Zugriff auf gespeicherte Daten nur authentisierten Nutzern zu gestatten.

US 6,079,019 A beschreibt eine IC Speicherkarte mit einem entschlüsselnden Auslesekanal, über den Daten anlässlich erfolgreicher Authentisierung in entschlüsselter Form auslesbar sind, und mit einem direkten Auslesekanal, über den Daten anlässlich fehlerhafter Authentisierung in verschlüsselter Form ausgebbar sind.

US 2007/113097 A1 offenbart ein Speichermedium mit Verschlüsselungseinrichtung gemäß dem Oberbegriff von Anspruch 1. Verschlüsselt in einem Speicher des Speichermediums abgespeicherte Daten werden anlässlich einer erfolgreichen Authentisierung gegenüber dem Speichermedium entschlüsselnd aus dem Speicher augelesen. Anlässlich einer fehlerhaften Authentisierung wird der Zugriff auf den Speicher verweigert.

Der Erfindung liegt die Aufgabe zu Grunde, ein Speichermedium mit Verschlüsselungsoption zu schaffen, das ein sicheres Abspeichern von Daten auch in einer nicht vertrauenswürdigen Umgebung ermöglicht.

Die Aufgabe wird gelöst durch ein Speichermedium nach Anspruch 1. Vorteilhafte Ausgestaltungen der Erfindung sind in den abhängigen Ansprüchen angegeben.

Das Speichermedium ist ausgestattet mit einem elektronischen Speicherbereich, einer Schnittstelle zum Einlesen von Daten in das Speichermedium und zum Auslesen von Daten aus dem Speichermedium, einer zwischen die Schnittstelle und den Speicherbereich gekoppelten Einleseeinrichtung zum Speichern von Daten von der Schnittstelle in den Speicherbereich, einer zwischen die Schnittstelle und den Speicherbereich gekoppelten Ausleseeinrichtung zum Ausgeben von Daten aus dem Speicherbereich an die Schnittstelle, einem Schlüsselspeicher, in dem ein geheimer Schlüssel abgespeichert oder abspeicherbar ist, einer mit der Einleseeinrichtung gekoppelten Verschlüsselungseinrichtung zum Verschlüsseln von an der Schnittstelle in das Speichermedium eingegebenen Daten mit dem Schlüssel, und einer mit der Ausleseeinrichtung gekoppelten Entschlüsselungseinrichtung zum Entschlüsseln von aus dem Speicherbereich ausgegebenen Daten mit dem Schlüssel.

Das Speichermedium zeichnet sich dadurch aus, dass die Einleseeinrichtung dazu eingerichtet ist, jegliche an der Schnittstelle zum Abspeichern im Speicherbereich eingegebenen Daten mit dem im Schlüsselspeicher abgespeicherten Schlüssel zu verschlüsseln und verschlüsselt im Speicherbereich abzulegen, und dass die Ausleseeinrichtung zwei unterschiedliche Auslesekanäle aufweist. Genauer gibt es einen ersten, direkten Auslesekanal, der dazu eingerichtet ist, dass, wenn Daten über den direkten Auslesekanal ausgegeben werden, im Speicherbereich verschlüsselt abgespeicherte Daten unter Umgehung der Entschlüsselungseinrichtung in der verschlüsselten Form an die Schnittstelle ausgebbar sind. Weiter gibt es einen zweiten, entschlüsselnden Auslesekanal, der dazu eingerichtet ist, dass, wenn Daten über den entschlüsselnden Auslesekanal ausgegeben werden, im Speicherbereich verschlüsselt abgespeicherte Daten unter Verwendung der Entschlüsselungseinrichtung mit dem im Schlüsselspeicher abgespeicherten Schlüssel oder einem dem Schlüssel entsprechenden, im Schlüsselspeicher abgespeicherten Entschlüsselungsschlüssel entschlüsselbar sind und in entschlüsselter Form an die Schnittstelle ausgebbar sind.

Bei dem Speichermedium werden also einerseits jegliche an der Schnittstelle eingegebenen Daten verschlüsselt, ohne Eingriffsmöglichkeit eines Nutzers des Speichermediums. Dies ermöglicht eine Beauftragung nicht vertrauenswürdiger Personen mit dem Aufnehmen und Abspeichern von Daten.

Weiter können bei dem Speichermedium verschlüsselt abgespeicherte Daten wahlweise verschlüsselt oder entschlüsselt ausgegeben werden. Beispielsweise kann ein Mitarbeiter eines Überwachungsdienstes, der mit dem Speichermedium Daten aufgezeichnet hat, die verschlüsselten Daten in verschlüsselter Form aus dem Speichermedium auslesen und in verschlüsselter Form an eine vertrauenswürdige Zentrale übermitteln. Diese Vorgehensweise ist z.B. in Fällen anwendbar, wenn der Mitarbeiter des Überwachungsdienstes das Speichermedium behält und lediglich die Daten an die Zentrale übermittelt. In Fällen, wenn die Zentrale nicht nur die Daten sondern das komplette Speichermedium bekommt, kann ein vertrauenswürdiger Mitarbeiter der Zentrale die Daten während des Auslesevorgangs entschlüsseln und dadurch in entschlüsselter Form aus dem Speichermedium ausgeben.

Wahlweise hat das Speichermedium weiter eine mit der Ausleseeinrichtung gekoppelte Authentisierungseinrichtung, die derart eingerichtet ist, dass über den entschlüsselnden Auslesekanal die Daten höchstens anlässlich einer erfolgreichen Authentisierung in entschlüsselter Form an die Schnittstelle ausgebbar sind. Hierdurch ist sichergestellt, dass nur vertrauenswürdige Nutzer, die sich dadurch auszeichnen, dass sie sich gegenüber dem Speichermedium erfolgreich authentifizieren können, die abgespeicherten Daten im Klartext, d.h. in entschlüsselter Form bzw. nicht verschlüsselter Form, bekommen können.

Wahlweise ist die Authentisierungseinrichtung weiter derart eingerichtet, dass anlässlich einer erfolglosen Authentisierung die Daten über den direkten Auslesekanal in der verschlüsselten Form, d.h. wie im Speicher abgespeichert, ausgegeben werden, d.h. wie bei einem Auslesen ohne Authentisierung.

Wahlweise ist weiter der Speicherbereich zumindest teilweise als Flash-Speicher gestaltet. Das Speichermedium ist wahlweise eine Flash-Speicherkarte, die intelligent gestaltet ist, d.h. einen Smart Card Mikroprozessor oder/und Kryptoprozessor oder dergleichen aufweist.

Wahlweise ist als Schlüssel ein symmetrischer Schlüssel eines symmetrischen Verschlüsselungssystems vorgesehen ist. In diesem Fall wird zur Verschlüsselung und Entschlüsselung ein und derselbe Schlüssel verwendet. Prinzipiell ist es auch möglich, dass zur Ver- und Entschlüsselung zwei unterschiedliche zueinander passende Schlüssel verwendet werden, die wahlweise beide im Speichermedium, z.B. im Schlüsselspeicher, abgespeichert sind.

Die Verschlüsselungseinrichtung und die Entschlüsselungseinrichtung können wahlweise als zwei getrennte Einrichtungen oder als eine einzige kombinierte Ver- und Entschlüsselungseinrichtung gestaltet sein, und sind wahlweise als ein bzw. zwei Kryptoprozessor(en) oder Smart Card Mikroprozessor(en) gestaltet.

Im Folgenden wird die Erfindung an Hand von Ausführungsbeispielen und unter Bezugnahme auf die Zeichnung näher erläutert, in der zeigen:
- Fig. 1: ein Speichermedium gemäß einer Ausführungsform der Erfindung;
- Fig. 2: ein Einlesen von Daten in das Speichermedium aus Fig. 1;
- Fig. 3: ein Auslesen von Daten aus dem Speichermedium aus Fig. 1 über einen ersten, direkten Auslesekanal A;
- Fig. 4: ein Auslesen von Daten aus dem Speichermedium aus Fig. 1 über einen zweiten, entschlüsselnden Auslesekanal B;
- Fig. 5: ein nachträgliches Entschlüsseln von gemäß Fig. 3 verschlüsselt ausgelesenen Daten.

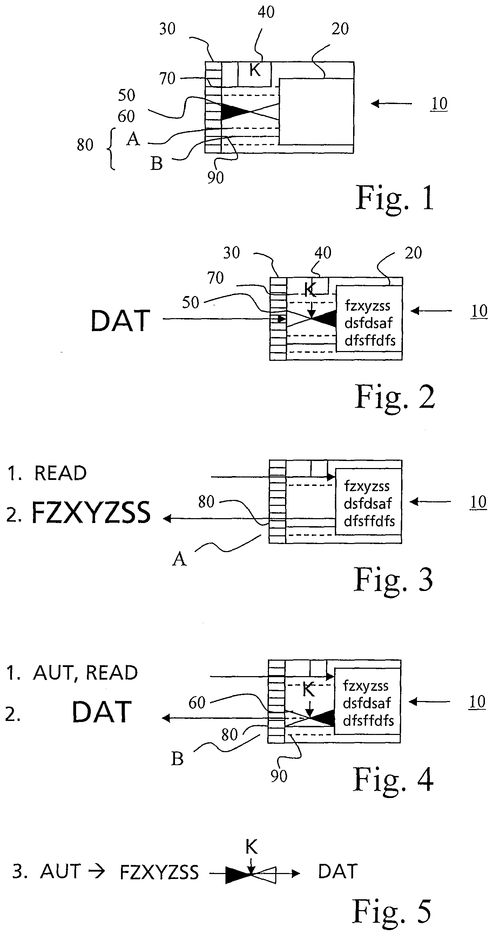

Fig. 1 zeigt ein Speichermedium 10 gemäß einer Ausführungsform der Erfindung, mit einem elektronischen Speicherbereich 20, einer Schnittstelle 30 zum Einlesen von Daten in das Speichermedium (in den Speicherbereich 20) und zum Auslesen von Daten aus dem Speichermedium (aus dem Speicherbereich 20), einer zwischen die Schnittstelle 30 und den Speicherbereich 20 gekoppelten Einleseeinrichtung 70 zum Speichern von Daten von der Schnittstelle 30 in den Speicherbereich 20, einer zwischen die Schnittstelle 30 und den Speicherbereich 20 gekoppelten Ausleseeinrichtung 80 zu Ausgeben von Daten aus dem Speicherbereich 20 an die Schnittstelle 30, einer mit der Ausleseeinrichtung 80 gekoppelten Authentisierungseinrichtung 90, einem Schlüsselspeicher 40, in dem ein geheimer Schlüssel K abgespeichert ist, einer mit der Einleseeinrichtung 70 gekoppelten Verschlüsselungseinrichtung 50 zum Verschlüsseln von an der Schnittstelle 30 in das Speichermedium 10 eingegebenen Daten mit dem Schlüssel K, und einer mit der Ausleseeinrichtung 80 gekoppelten Entschlüsselungseinrichtung 60 zum Entschlüsseln von aus dem Speicherbereich 20 ausgegebenen Daten mit dem Schlüssel K. Die Einleseeinrichtung 70 und die Verschlüsselungseinrichtung 50 haben keine Nutzerschnittstelle und erlauben somit einem Nutzer keine Auswahl, ob eingegebene Daten verschlüsselt werden oder nicht. Die Verschlüsselungseinrichtung 50 führt an von der Schnittstelle 30 bekommenen Daten stets eine Verschlüsselung durch. Die Ausleseeinrichtung 80 hat einen ersten, direkten Auslesekanal A und einen zweiten, entschlüsselnden Auslesekanal B. In den zweiten, entschlüsselnden Auslesekanal B ist die Authentisierungseinrichtung 90 eingebunden.

An die Schnittstelle 30 des Speichermediums 10 ist ein Schreib-/Lesegerät (nicht gezeigt) für Speichermedien 10 koppelbar, so dass Daten vom Schreib-/Lesegerät an das Speichermedium 10 und vom Speichermedium 10 an das Schreib-/Lesegerät übertragen werden können.

Fig. 2 zeigt, am Speichermedium 10 aus Fig.1, ein Einlesen von Daten DAT in ein Speichermedium 10. Die Bezugszeichen sind in Fig. 2-4 der Übersichtlichkeit halber teilweise weggelassen. Daten DAT werden an der Schnittstelle 30 an das Speichermedium 10 bereitgestellt. Die Einleseeinrichtung 70 führt die an der Schnittstelle 30 bereitstehenden Daten DAT der Verschlüsselungseinrichtung 50 zu, welche die Daten DAT verschlüsselt und als verschlüsselte Daten FZXYZSS im Speicherbereich 20 abspeichert.

Fig. 3 zeigt ein Auslesen von Daten aus dem Speichermedium 10 aus Fig. 1 über einen ersten, direkten Auslesekanal A der Ausleseeinrichtung 80. Über die Schnittstelle 30 wird ein Lesebefehl READ in das Speichermedium 10 eingegeben. Die Ausleseeinrichtung 80 verarbeitet den Lesebefehl READ und liefert die auszulesenden verschlüsselten Daten FZXYZSS, z.B. den gesamten Speicherinhalt des Speicherbereichs 20 oder ggf. den Speicherinhalt eines auswählbaren Teilspeicherbereichs des Speicherbereichs 20, in verschlüsselter Form, d.h. wie im Speicherbereich abgespeichert, an die Schnittstelle 30. An der Schnittstelle 30 stehen somit verschlüsselte Daten FZXYZSS bereit, zur Entgegennahme durch ein Schreib-/Lesegerät.

Fig. 4 zeigt ein Auslesen von Daten aus dem Speichermedium 10 aus Fig. 1 über einen zweiten, entschlüsselnden Auslesekanal B der Ausleseeinrichtung 80. Über die Schnittstelle 30 wird ein Authentisierungsbefehl AUT und ein Lesebefehl READ in das Speichermedium 10 eingegeben. Die Ausleseeinrichtung 80 verarbeitet zuerst den Authentisierungsbefehl AUT und sendet ihn zur Abarbeitung an die Authentisierungseinrichtung 90. Die Authentisierungseinrichtung 90 arbeitet den Authentisierungsbefehl AUT ab. Ist die hierdurch durchgeführte Authentisierung mit dem Authentisierungsbefehl AUT erfolgreich, wird anschließend durch die Ausleseeinrichtung 80 der Lesebefehl READ verarbeitet. Auszulesende verschlüsselte Daten FZXYZSS, z.B. der gesamte Speicherinhalt des Speicherbereichs 20 oder ggf. der Speicherinhalt eines auswählbaren Teilspeicherbereichs des Speicherbereichs 20, werden an die Entschlüsselungseinrichtung 60 übertragen und von der Entschlüsselungseinrichtung 60 zu entschlüsselten Daten DAT entschlüsselt. Die entschlüsselten Daten DAT werden an der Schnittstelle 30 bereitgestellt, so dass sie von einem Schreib-/Lesegerät entgegengenommen werden können.

Bei der Ausführungsform des Auslesens von Daten aus Fig. 4 werden der Authentisierungsbefehl AUT und der Lesebefehl READ in einem einzigen Sendevorgang in die Schnittstelle 30 eingegeben. Dabei wird beispielsweise der Nutzer aufgefordert, sich zu authentisieren und seine Authentisierung implizit als Anforderung des Auslesens von Daten ausgewertet. Alternativ wird zuerst ein Authentisierungsbefehl AUT in die Schnittstelle 30 eingegeben und von der Ausleseeinrichtung 80 und der Authentisierungseinrichtung 90 ausgewertet. Anlässlich einer erfolgreichen Authentisierung wird vom Speichermedium 10 eine Authentisierungsbestätigung an die Schnittstelle 30 ausgegeben und die Eingabe eines Lesebefehls in die Schnittstelle 30 angefordert. Anlässlich eines Eingebens des Lesebefehls READ in die Schnittstelle 30 werden die Daten wie oben beschrieben entschlüsselt und in entschlüsselter Form DAT an der Schnittstelle 30 bereitgestellt, zur Entgegennahme durch ein Schreib-/Lesegerät.

Anlässlich einer erfolglosen Authentisierung werden wahlweise verschlüsselte Daten ausgegeben, im Wesentlichen wie bei einem Auslesen ohne Authentisierung, oder alternativ gar keine Daten ausgegeben.

## Patentansprüche

1. Speichermedium (10) mit Verschlüsselungseinrichtung, mit
- einem elektronischen Speicherbereich (20),
- einer Schnittstelle (30) zum Einlesen von Daten in das Speichermedium (10) und zum Auslesen von Daten aus dem Speichermedium (10),
- einer zwischen die Schnittstelle (30) und den Speicherbereich (20) gekoppelten Einleseeinrichtung (70) zum Speichern von Daten von der Schnittstelle (30) in den Speicherbereich (20),
- einer zwischen die Schnittstelle (30) und den Speicherbereich (20) gekoppelten Ausleseeinrichtung (80) zum Ausgeben von Daten aus dem Speicherbereich (20) an die Schnittstelle (30),
- einem Schlüsselspeicher (40), in dem ein geheimer Schlüssel (K) abgespeichert oder abspeicherbar ist,
- einer mit der Einleseeinrichtung (70) gekoppelten Verschlüsselungseinrichtung (50) zum Verschlüsseln von an der Schnittstelle (30) in das Speichermedium (10) eingegebenen Daten mit dem Schlüssel (K), und
- einer mit der Ausleseeinrichtung (80) gekoppelten Entschlüsselungseinrichtung (60) zum Entschlüsseln von aus dem Speicherbereich (20) ausgegebenen Daten, wobei
- die Ausleseeinrichtung (80) aufweist:
- einen entschlüsselnden Auslesekanal (B), der dazu eingerichtet ist, dass, über den entschlüsselnden Auslesekanal (B), im Speicherbereich (20) verschlüsselt abgespeicherte Daten unter Verwendung der Entschlüsselungseinrichtung (60) mit dem im Schlüsselspeicher (40) abgespeicherten Schlüssel (K) oder einem dem Schlüssel (K) entsprechenden, im Schlüsselspeicher (40) abgespeicherten Entschlüsselungsschlüssel entschlüsselbar sind und in entschlüsselter Form an die Schnittstelle (30) ausgebbar sind und
- das Speichermedium weiterhin eine Authentisierungseinrichtung aufweist, die mit der Ausleseeinrichtung (80) gekoppelt ist, wobei die Authentisierungseinrichtung, derart eingerichtet ist, dass
über den entschlüsselnden Auslesekanal (B) die Daten höchstens anlässlich einer erfolgreichen Authentisierung in entschlüsselter Form an die Schnittstelle (30) ausgebbar sind,
**dadurch gekennzeichnet, dass**
- die Einleseeinrichtung (70) dazu eingerichtet ist, jegliche an der Schnittstelle (30) zum Abspeichern im Speicherbereich (20) eingegebenen Daten mit dem im Schlüsselspeicher (40) abgespeicherten Schlüssel (K) zu verschlüsseln und verschlüsselt im Speicherbereich (20) abzulegen, und
- die Ausleseeinrichtung (80) weiter aufweist:
- einen direkten Auslesekanal (A), der dazu eingerichtet ist, dass, über den direkten Auslesekanal (A), im Speicherbereich (20) verschlüsselt abgespeicherte Daten unter Umgehung der Entschlüsselungseinrichtung (60) in der verschlüsselten Form an die Schnittstelle (30) ausgebbar sind, und
- die Daten anlässlich fehlender oder anlässlich erfolgloser Authentisierung über den direkten Auslesekanal (A) in der verschlüsselten Form ausgebbar sind.

2. Speichermedium (10) nach Anspruch 1, wobei der Speicherbereich (20) zumindest teilweise als Flash-Speicher gestaltet ist.

3. Speichermedium (10) nach einem der Ansprüche 1 bis 2, wobei als Schlüssel (K) ein symmetrischer Schlüssel eines symmetrischen Verschlüsselungssystems vorgesehen ist.

## Claims

1. A storage medium (10) with encryption device, with
- an electronic storage area (20),
- an interface (30) for reading in data into the storage medium (10) and for reading out data from the storage medium (10),
- a reading-in device (70) coupled between the interface (30) and the storage area (20) for storing data from the interface (30) into the storage area (20),
- a reading-out device (80) coupled between the interface (30) and the storage area (20) for outputting data from the storage area (20) to the interface (30),
- a key memory (40) in which a secret key (K) is stored or can be stored,
- an encryption device (50) coupled with the reading-in device (70) for encrypting data input at the interface (30) into the storage medium (10) with the key (K), and
- a decryption device (60) coupled with the reading-out device (80) for decrypting data output from the storage area (20), wherein
- the reading-out device (80) has:
- a decrypting reading-out channel (B) adapted so that, via the decrypting reading-out channel (B), data stored in the storage area (20) in encrypted fashion can be decrypted employing the decryption device (60) with the key (K) stored in the key memory (40) or a decryption key corresponding to the key (K) stored in the key memory (40), and can be output in decrypted form to the interface (30) and
- the storage medium further has an authentication device coupled with the reading-out device (80), wherein the authentication device is adapted such that via the decrypting reading-out channel (B) the data can be output to the interface (30) in decrypted form at most upon a successful authentication,
**characterized in that**
- the reading-in device (70) is adapted to encrypt any data input at the interface (30) for storing in the storage area (20) with the key (K) stored in the key memory (40) and to store said data in encrypted fashion in the storage area (20), and
- the reading-out device (80) further has:
- a direct reading-out channel (A) adapted so that, via the direct reading-out channel (A), data stored in encrypted fashion in the storage area (20) can be output to the interface (30) in the encrypted form, bypassing the decryption device (60), and
- the data can be output via the direct reading-out channel (A) in the encrypted form upon non-existent or unsuccessful authentication.

2. The storage medium (10) according to claim 1, wherein the storage area (20) is configured at least partly as a flash memory.

3. The storage medium (10) according to any of the claims 1 to 2, wherein a symmetrical key of a symmetrical encryption system is provided as the key (K).

## Revendications

1. Support mémoire (10) ayant un dispositif de chiffrement, comprenant :
- une zone mémoire (20) électronique,
- une interface (30) pour l'enregistrement de données dans le support mémoire (10) et
pour l'extraction de données depuis le support mémoire (10),
- un dispositif d'enregistrement (70) couplé entre l'interface (30) et la zone mémoire (20) pour la mémorisation de données de l'interface (30) dans la zone mémoire (20),
- un dispositif d'extraction (80) couplé entre l'interface (30) et la zone mémoire (20) pour la délivrance en sortie de données depuis la zone mémoire (20) à l'interface (30),
- une mémoire de clé (40) dans laquelle une clé secrète (K) est mémorisée ou mémorisable,
- un dispositif de chiffrement (50) couplé au dispositif d'enregistrement (70) pour le chiffrement, avec la clé (K), de données entrées à l'interface (30) dans le support mémoire (10),
- un dispositif de déchiffrement (60) couplé au dispositif d'extraction (80) pour le déchiffrement de données délivrées en sortie depuis la zone mémoire (20), cependant que
- le dispositif d'extraction (80) comporte :
- un canal d'extraction (B) déchiffrant conçu de telle sorte que, par le biais du canal d'extraction (B) déchiffrant, des données mémorisées sous forme chiffrée dans la zone mémoire (20) sont, en ayant recours au dispositif de déchiffrement (60), déchiffrables avec la clé (K) mémorisée dans la mémoire de clé (40) ou avec une clé de déchiffrement qui correspond à la clé (K) et qui est mémorisée dans la mémoire de clé (40), et peuvent, sous forme chiffrée, être délivrées en sortie à l'interface (30), et
- le support mémoire comporte en outre un dispositif d'authentification couplé au dispositif d'extraction (80), cependant que le dispositif d'authentification est conçu de telle façon que, par le biais du canal d'extraction (B) déchiffrant, ce n'est qu'au plus lors d'une authentification aboutie que les données peuvent être, sous forme déchiffrée, délivrées en sortie à l'interface (30),
**caractérisé en ce que**
- le dispositif d'enregistrement (70) est conçu pour chiffrer avec la clé (K) mémorisée dans la mémoire de clé (40) toutes données entrées à l'interface (30) pour être mémorisées dans la zone mémoire (20) et pour les stocker sous forme chiffrée dans la zone mémoire (20), et
- le dispositif d'extraction (80) comporte en outre :
- un canal direct d'extraction (A) conçu de telle sorte que, par le biais du canal direct d'extraction (A), des données mémorisées sous forme chiffrée dans la zone mémoire (20) peuvent, sans avoir recours au dispositif de déchiffrement (60), être, sous la forme chiffrée, délivrées en sortie à l'interface (30), et
- les données peuvent, lors d'une authentification manquante ou lors d'une authentification non aboutie, être, par le biais du canal direct d'extraction (A), délivrées sous la forme chiffrée.

2. Support mémoire (10) selon la revendication 1, la zone mémoire (20) étant réalisée au moins partiellement sous forme de mémoire flash.

3. Support mémoire (10) selon une des revendications de 1 à 2, cependant que, en tant que clé (K), c'est une clé symétrique d'un système de chiffrement symétrique qui est prévue.
